# EUROPEAN PATENT SPECIFICATION

(11) **EP 1 159 117 B1**
(45) Date of publication and mention of the grant of the patent: **15.10.2003**
(21) Application number: 00914121.9
(22) Date of filing: 10.03.2000
(51) Int. Cl.: B29C 43/28

(54) **METHOD AND APPARATUS FOR APPLYING A PLASTIC EDGE STRIP TO A PLATE-LIKE WORKPIECE**
VERFAHREN UND VORRICHTUNG ZUM AUFTRAGEN EINES KUNSTSTOFFRANDSTREIFENS AUF EINEM PLATTENFÖRMIGEN WERKSTÜCK
PROCEDE ET APPAREIL POUR L'APPLICATION D'UNE BANDE DE BORDURE EN PLASTIQUE SUR UNE PIECE A USINER DU TYPE PLAQUE

(30) Priority: 10.03.1999 ZA 9901940; 08.07.1999 ZA 9904442
(43) Date of publication of application: 05.12.2001
(73) Proprietor: TTG Technology Transfer GmbH, 8753 Mollis (CH)
(72) Inventor: HÖNIG, Erhard, Bryanston, 2021 Gauteng (ZA)
(74) Representative: HOFFMANN - EITLE
(86) International application number: EP0002150
(87) International publication number: WO00053387

(56) References cited:
- EP-A- 0 519 130
- DE-A- 4 025 596
- DE-U- 29 817 408
- US-A- 4 597 821
- US-A- 5 478 516

## Description

### TECHNICAL BACKGROUND

This invention relates to an apparatus for applying a plastic edge strip to a plate-like workpiece, and a method of applying the edge strip to the workpiece.

The workpiece may be a wooden board, a chip or particle board, or a board of wood-like particles.

DE 298 17 408 U1 discloses such an apparatus for applying a plastic edge strip to a plate-like workpiece. The plastic edge strip is bonded to the edges of the plate-like workpiece by means of a hot-melt-type adhesive which is applied to the edges before applying the strip. In this manner, strips made of melamine, polyester resin, PVC, ABS, polypropylene, etc. can be applied to workpieces, in particular to wooden boards and chip or particle boards.

### DESCRIPTION OF THE INVENTION

According to the invention there is provided an apparatus for applying a plastic edge strip on an edge of a plate-like workpiece, which includes extrusion means for extruding a strand of plastic material on an edge of the workpiece; and forming means for forming the extruded strand of plastic material in a desired shape or profile.

Further according to the invention there is provided a method of applying a plastic edge strip on an edge of a plate-like workpiece, which comprises extruding a strand of plastic material on an edge of the workpiece; and forming the extruded strand of plastic material in a desired shape.

As indicated above, the workpiece may be a wooden board, a chip or particle board, or a board of wood-like particles and the like.

In one embodiment, the workpiece may be transported past the extrusion means and the apparatus may further comprise transporting means for transporting the workpiece past the extrusion means. In an alternative embodiment, the workpiece may be stationary and the extrusion means and forming means are transported along the edge to which the strip is to be applied, and the apparatus may have a movable arm on which the extrusion means and forming means are carried.

The forming means may include at least one rotatable wheel-like or roller-like component having forming formations at its rim. For convenience, such a forming component is hereinafter referred to as a "roller". It will thus be appreciated by those skilled in the art that the forming roller may have a recessed rim in which the forming formations are located. Thus, the roller will have a circumferential profile substantially corresponding with the desired profile of the strand of plastic material applied on the edge of the workpiece.

The forming means may comprise several rotatable rollers arranged successively, with different circumferential profiles such that the rollers together deform the strand of of plastic material into the desired profile.
Alternatively, the forming means may include a doctor blade or a kind of forming shoe.

The plastic may be a thermoplastic material and may, for example, be PVC, polystyrene, polyurethane or any other suitable thermoplastic synthetic plastics material. Plastic in sense of the present application may include any other formable mass which hardens after a predetermined time period.

It will be appreciated that the profile of the extruded strand of plastic material is, to a large extent, irrelevant, and the desired shape or profile and profile is provided by the extruded strand being squeezed between the forming roller and the edge of the workpiece. The shape and profile of the formed edge strip is not determined by the head or aperture of the extrusion means.

The forming roller may include projections and recesses to provide the surface of the rolled, profiled strip with ornamentation or a pattern as well as the profile.

The extruded strand may be extruded onto the edge of the workpiece, the strand then being squeezed between the edge and the forming roller.

The edge of the workpiece onto which the formed strip is to be bonded may be coated with a suitable adhesive or bonding layer. The apparatus may thus have an adhesive applicator.

Persons skilled in the art will be aware that an adhesive layer could be applied to the edge of the workpiece in a prior operation and the adhesive is then activated, by heat or in any other suitable way depending on the nature of the adhesive, immediately before the extruded strand is applied to the edge.

The forming roller may be freely rotatable or it may be driven.

A surface ornamental layer may also be applied onto an outer surface of the formed strip. Conveniently, such an ornamental layer may be provided by a foil which is passed between the strip and the forming roller. The foil may be applied onto a part of the formed strip or across the entire surface of the formed strip. The foil may be carried on a carrier which is removed downstream of the forming roller.

It will further be appreciated by those skilled in the art that the cross sectional area of the extruded strand of plastic material may be substantially the same as that of the formed strip. However, the extruded strand may have slightly more material than that of the desired profile, so that there is a small ribbon on either side of the formed strip. The apparatus may then have a stripping station to remove the ribbons.

The apparatus may have a support structure for supporting the workpiece whilst the edge strip is applied thereto. The support structure may support the workpiece in a generally horizontal or vertical orientation such that the edge is either vertically or horizontally oriented. If the edge is vertically oriented, the forming roller will be rotatable about a vertical axis whereas it will be rotatable about a horizontal axis if the edge is horizontally oriented.

A transporting means may also be provided for transporting the workpiece relatively to the forming roller and an extrusion head of the extrusion means. As indicated above, the transporting means may displace the workpiece or the extrusion means and forming means. Conveniently, the extrusion head and forming roller remain in position whilst the workpiece is transported relative thereto. It will be appreciated that the workpiece will be transported linearly if the edge is straight, or along a curved path if the edge is curved. Such a transporting means may transport the support structure itself or the workpiece.

Instead, of the workpiece being transported by the transporting means, the workpiece may be freely displaceable on the support structure and may be transported by the forming roller, there being suitable frictional engagement between the forming roller and the workpiece, and the forming roller being driven by a motor.

The workpiece may be transported at the same speed as the circumferential speed of the forming roller.

A pressure means may also be provided to urge the edge of the workpiece against the forming roller. This may be facilitated by pressure wheels that are spaced from the forming roller a distance equal to the width of the workpiece and are rotatable about parallel axes.

A guide wheel may also be provided between the forming roller and the extrusion head for guiding the feedstock strand between the edge of the workpiece and the forming roller.

A cooling station may also be provided downstream of the forming roller.

The edge of the workpiece may have a suitable profile.

A machine according to the invention may also include a pre-processing means for forming the edge of the workpiece in a desired profile, for example by milling.

Those skilled in the art will further understand that the board may have any length and width dimensions and the term "board" includes a "plank".

### BRIEF DESCRIPTION OF THE ACCOMPANYING DRAWINGS

The invention is now described, by way of an example with reference to the accompanying drawings, in which:
Figure 1 shows schematically a plan view of a first embodiment of an apparatus in accordance with the invention for applying a plastic edge strip to a wooden board;
Figure 2 shows schematically a side view of a roller forming part of the apparatus of Figure 1 and how the edge of the board and a feedstock strand interact therewith; and
Figure 3 shows schematically a plan view of a second embodiment of an apparatus in accordance with the invention for applying a plastic edge strip to a wooden board.

### DESCRIPTION OF EMBODIMENTS OF THE INVENTION

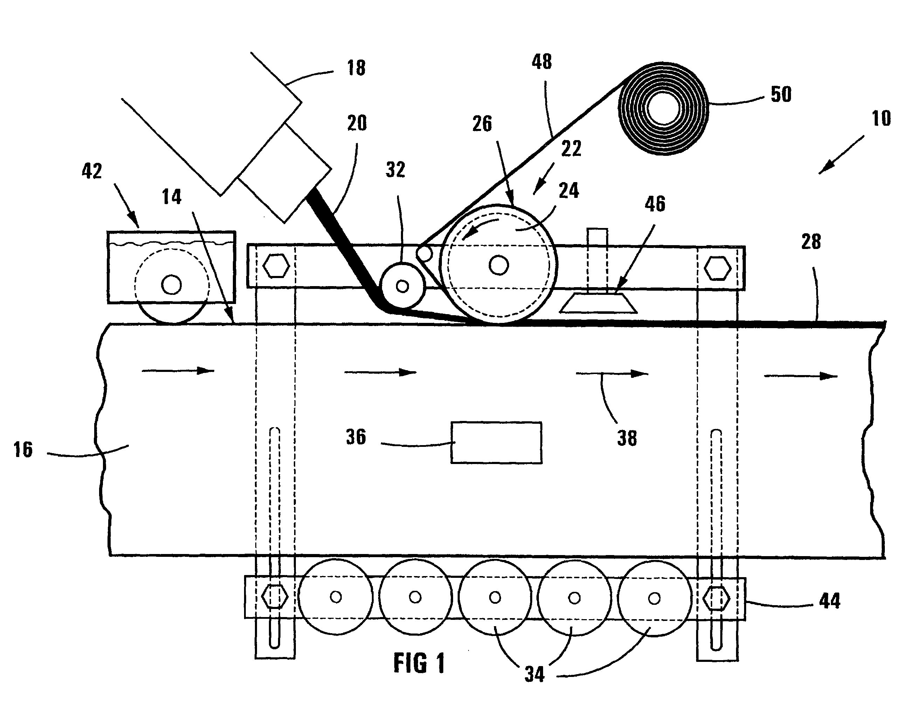

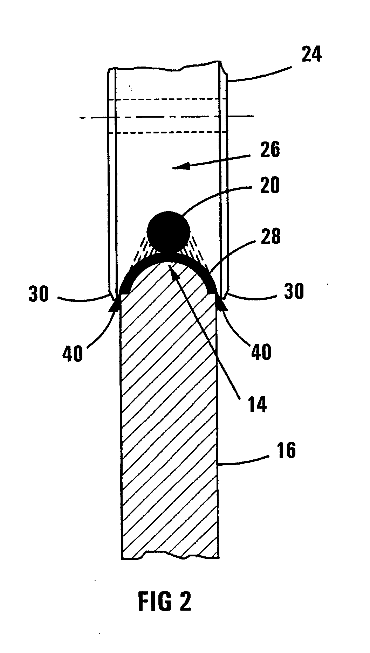

Referring to Figure 1, an apparatus for applying a plastic edge strip 12 to an edge 14 of a wooden board 16 is designated generally by reference numeral 10. The apparatus 10 has an extruder 18 which provides an extruded strand 20 that has a circular cross section as is more clearly shown in Figure 2. The extruded strand 20 is of soft PVC.

Immediately downstream of the extruder 18 and close enough that the extruded strand 20 does not cool much and remains sufficiently hot to be moulded, there is a moulding station 22.

The moulding station 22 has a roller 24. The roller 24 has a concave rim 26 as is seen more clearly in Figure 2. As will be appreciated from what is said below, the concave rim 26 defines a moulding cavity together with the edge 14. Thus, the circumference of the roller 24 is profiled to mould the extruded strand 20 to have the desired profile. As seen in Figure 2 the extruded strand 20 is moulded onto the edge 14 of the board 16 into the formed edge strip 12 which follows the profile and contour of the edge 14 of the board 16 and is securely adhered thereto.

As is seen in Figure 2, the concave rim 26 is complementarily shaped to the edge 14 of the board 16.

It will further be appreciated that the roller 24 has fairly sharp sides 30 and the roller 24 and the edge 14 are spaced so that there is a gap of about 0,5 mm between the borders of the edge 14 and the sides 30.

A guide wheel 32 is positioned between the extruder 18 and the roller 24 to guide the strand 20 between the roller 24 and the edge 14.

The board 16 is supported in a horizontally extending manner on support rollers (not shown) with the edge 14 extending vertically. Pressure wheels 34, which are rotatable about vertical axes urge the edge 14 of the board 16 against the roller 24. The pressure wheels 34 are mounted in an adjustable manner on a bar 44 so that the spacing between them and the roller 24 is variable. The roller 24 is also rotatable about a vertical axis that is parallel to the axes of the pressure wheels 34. A feed wheel 36 engages the upper surface of the board 16 to drive it in the direction of arrows 38 so that the edge 14 moves linearly past the roller 24. The roller 24 may be rotated by engagement with the edge 14 or may be driven at the same circumferential speed as the board 16.

Thus, the edge 14 and the roller 24 define between them a progressive moulding cavity as the roller 24 rotates and the edge 14 moves past it. The extruded strand 20 is fed onto the edge 14 to be moulded into the formed strip 12 by the progressive moulding cavity.

It will be appreciated further that the extruded strand 20 is drawn between the roller 24 and the edge 14 and is squeezed to have the desired profile as the roller 24 rotates.

It will be understood that the progressive moulding cavity has a cross sectional area and the extruded strand 20 has a slightly larger cross sectional area so that there is sufficient material to fill the progressive moulding cavity and have a small excess. This small excess is then squeezed out between the roller 24 and the edge 14 to provide side ribbons 40. These are easily trimmed off and removed by a stripping station (not shown).

The formed strip 12 is bonded to the edge 14, bonding being improved by an adhesive applied by an applicator 42. The adhesive is a heat activated, solvent based polyurethane such as that supplied by Genkem, under licence from Helmilin Werke, with code VAW 595.

The formed strip 12 travels past a cooling device 46 which uses either air or water to cool the formed strip 12.

A woodgrain ornamental foil 48 is supplied from a coil 50 next to the roller 24 between the extruded strand 20 and the roller 24. The foil 48 is bonded by heat and pressure as it passes under the roller 24 onto the outer surface of the formed strip 12.

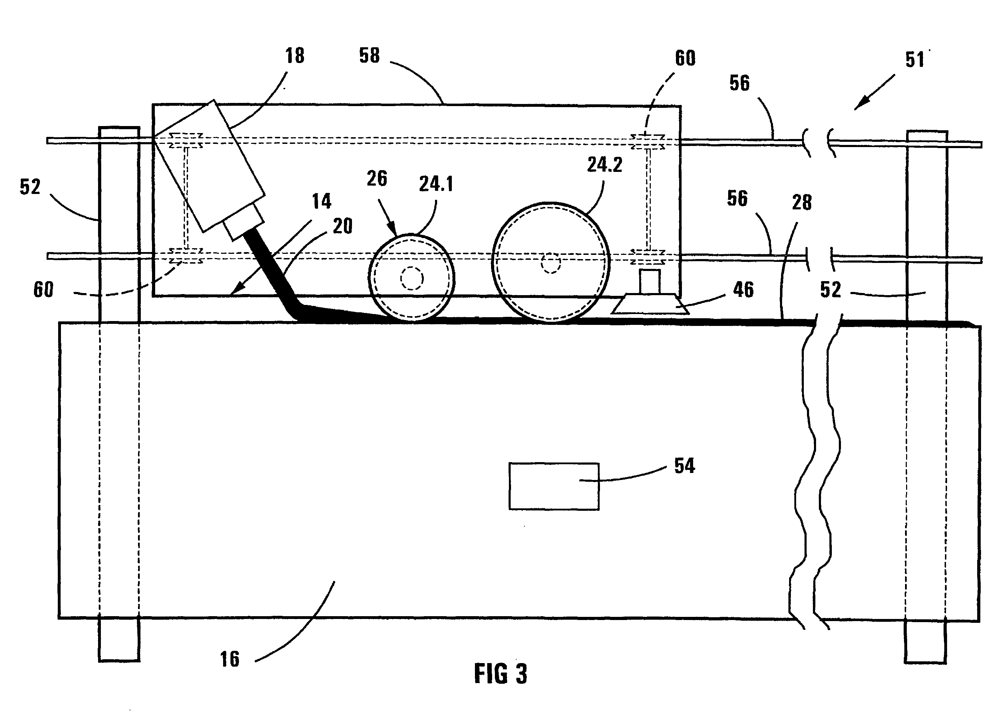

Figure 3 is now referred to. Shown therein by reference numeral 51 is a second embodiment of an apparatus for applying a plastic edge strip to an edge of a wooden board. The components of apparatus 51 that are similar to that of the apparatus 10 have the same reference numbers.

With the apparatus 51, the wooden board 16 is stationary and the extruder 18, the moulding rollers 24.1 and 24.2 and the cooling device 46 travel. Thus, the board 16 is supported on beams 52 and is clamped thereto by a clamp 54. The beams 52 also support rails 56. A carriage 58 is movably supported on the rails 56 by wheels 60. The carriage 58 is moved up and down the rails 56 by a suitable transport mechanism (not shown). The board 16 is clamped on the beams 52 with the edge 14 parallel to the rails 56 and the appropriate distance therefrom. Thus, as the carriage 58 is transported from one end to the other, the strip 20 is applied to the edge 14, is moulded by the rollers 24.1 and 24.2 to have the desired shape and profile and the formed strip 12 is cooled by the cooling device 46. The two rollers 24.1 and 24.2 progressively mould the extruded strip.

By means of the invention an edge strip is securely bonded to the edge of a wooden board, which may be fibre or chip board, in an efficient, economical and effective manner. The edge strip may also be provided with any suitable profile, pattern and ornamentation.

## Claims

1. Apparatus for applying a plastic edge strip (28) on an edge of a plate-like workpiece (16), such like a wooden board, a chip or particle board, a board of wood-like particles or the like,
**characterized in that**
the apparatus comprises:
- extrusion means (18) for extruding a strand of plastic material (20) on an edge (14) of the workpiece (16); and
- forming means (24) for subsequently forming the extruded strand of plastic material (20) in a desired profile.

2. Apparatus according to claim 1, **characterized in that** the apparatus further comprises transporting means (36) for transporting the workpiece (16) past the extrusion means (18).

3. Apparatus according to claim 1, **characterized in that** it comprises a stationary support means (52) for supporting the workpiece (16); a clamping means (54) for clamping the workpiece (16) to the support means; and a movable member (58) on which the extrusion means (18) and the forming means (24.1, 24.2) are carried such that the extrusion means (18) and the forming means (24.1, 24.2) are transportable along the edge to which the strip is to be applied.

4. Apparatus according to claim 1, **characterized in that** the apparatus further comprises at least one pressure means (34) to urge the workpiece (16) against the forming means (24).

5. Apparatus according to claim 1, **characterized in that** the forming means comprises at least one rotatable roller (24) having a circumferential profile substantially corresponding with the desired profile of the strand of plastic material (20) applied on the edge (14) of the workpiece (16).

6. Apparatus according to claim 1, **characterized in that** the forming means comprises several rotatable rollers (24) arranged successively, wherein the rollers (24) having different circumferential profiles such that the rollers (24) altogether deform the strand of plastic material (20) applied on the edge (14) of the workpiece (16) in the desired profile.

7. Apparatus according to claim 1, **characterized in that** the apparatus further comprises application means (42) for applying an adhesive to the edge (14) of the workpiece (16) to be covered by the strand of plastic material (20), wherein the application means (42) are arranged in front of the position at which the strand of plastic material (20) is applied on the edge (14) of the workpiece (16).

8. Apparatus according to claim 1, **characterized in that** the apparatus further comprises cooling means (46) for cooling the strand of plastic material (20) applied on the edge (14) of the workpiece (16).

9. Apparatus according to claim 1, **characterized in that** the apparatus further comprises supply means (50) for supplying a decorative layer (48) on the strand of plastic material (20) provided on the edge (16) of the workpiece (16).

10. Apparatus according to claim 6 and 7, **characterized in that** the cooling means (46) is arranged at a position in which the decorative layer (48) is already applied on th strand of plastic material (20).

11. Apparatus according to claim 1, **characterized in that** the transporting means comprises at least one pair of driven wheels (36) arranged such that the workpiece (16) is clamped between the wheels.

12. Method for applying a plastic edge strip (28) on an edge of a plate-like workpiece (16), such like a wooden board, a chip or particle board, a board of wood-like particles or the like,
**characterized in that**
the method comprises the following steps:
- extruding a strand of plastic material (20) on an edge (14) of the workpiece (16), and
- subsequently forming the extruded strand of plastic material (20) in a desired profile.

13. Method according to claim 12, **characterized in that** during the method step of extruding the strand of plastic material (20) on the edge (14) of the workpiece (16), the workpiece (16) is transported past an extrusion means for extruding the strand of plastic material (20). extrusion means for extruding the strand of plastic material (20).

14. Method according to claim 12, **characterized in that** during the method step of extruding the strand of plastic material (20) on the edge (14) of the workpiece (16), the workpiece (16) is stationary held and an extrusion means for extruding the strand of plastic material (20) is moved along the edge (14) of the workpiece (16).

15. Method according to one of the claims 12 - 14, **characterized in that** the strand of plastic material (20) is formed by forming means comprising at least one rotatable roller (24) having a circumferential profile substantially corresponding with the desired profile of the strand of plastic material (20) applied on the edge (14) of the workpiece (16).

16. Method according to one of the claims 12 - 14, **characterized in that** the strand of plastic material (20) is formed by forming means comprising several rotatable rollers (24) arranged successively, the rollers (24) having different circumferential profiles such that the rollers (24) altogether form the strand of plastic material (20) applied on the edge (14) of the workpiece (16) in the desired profile.

17. Method according to claim 12, **characterized in that** an adhesive is applied to the edge (14) of the'workpiece (16) before the strand of plastic material (20) is applied on the edge (14) of the workpiece (16).

18. Method according to claim 12, **characterized in that** the strand of plastic material (20) applied on the edge (14) of the workpiece (16) and formed in the desired profile is cooled by cooling means (46).

19. Method according to claim 12, **characterized in that** a decorative layer (48) is applied on the strand of plastic material (20) already extruded on the edge (14) of the workpiece (16).

20. Method according to claim 19, **characterized in that** the decorative layer is a foil (48).

## Patentansprüche

1. Vorrichtung zum Aufbringen eines Plastikkantenstreifens (28) auf eine Kante eines plattenartigen Werkstücks (16) wie beispielsweise eines Holzbretts, eines Bretts aus Spänen oder Partikeln, eine Bretts aus holzartigen Partikeln, etc.,
**dadurch gekennzeichnet, dass** die Vorrichtung folgendes aufweist:
- Extrusionsmittel (18) zum Extrudieren eines Strangs des Plastikmaterials (20) an eine Kante (14) des Werkstücks (16); und
- Formmittel (24) zum anschließenden Formen des extrudierten Strangs des Plastikmaterials (20) in ein gewünschtes Profil.

2. Vorrichtung nach Anspruch 1, **dadurch gekennzeichnet, dass** die Vorrichtung weiter Transportmittel (36) zum Transportieren des Werkstücks (16) an dem Extrusionsmittel (18) vorbei aufweist.

3. Vorrichtung nach Anspruch 1, **dadurch gekennzeichnet, dass** sie ein stationäres Haltemittel (52) zum Halten des Werkstücks (16) aufweist; ein Klemmmittel (54) zum Verklemmen des Werkstücks (16) an dem Haltemittel; und ein bewegliches Element (58), von welchem das Extrusionsmittel (18) und die Formmittel (24.1, 24.2) getragen werden, so dass das Extrusionsmittel (18) und die Formmittel (24.1, 24.2) entlang der Kante transportierbar sind, auf welche der Streifen aufgebracht werden soll.

4. Vorrichtung nach Anspruch 1, **dadurch gekennzeichnet, dass** die Vorrichtung weiter zumindest ein Druckmittel (34) zum Zwingen des Werkstücks (16) gegen das Formmittel (24) aufweist.

5. Vorrichtung nach Anspruch 1, **dadurch gekennzeichnet, dass** das Formmittel zumindest eine drehbare Walze (24) aufweist, die ein Umfangsprofil hat, das im wesentlichen mit dem gewünschten Profil des Strangs des Plastikmaterials (20) übereinstimmt, der auf die Kante (14) des Werkstücks (16) aufgebracht wird.

6. Vorrichtung nach Anspruch 1, **dadurch gekennzeichnet, dass** das Formmittel mehrere drehbare Walzen (24) aufweist, die aufeinanderfolgend angeordnet sind, wobei die Walzen (24) unterschiedliche Umfangsprofile haben, so dass die Walzen (24) zusammen den Strang des Plastikmaterials (20), der auf die Kante (14) des Werkstücks (16) aufgebracht wird, in das gewünschte Profil verformen.

7. Vorrichtung nach Anspruch 1, **dadurch gekennzeichnet, dass** die Vorrichtung weiter Anbringmittel (42) zum Anbringen eines Klebstoffs auf die Kante (14) des Werkstücks (16) aufweist, die mit dem Strang des Plastikmaterials (20) bedeckt werden soll, wobei das Anbringmittel (42) vor der Position angeordnet ist, an welcher der Strang des Plastikmaterials (20) auf die Kante (14) des Werkstücks (16) aufgebracht wird.

8. Vorrichtung nach Anspruch 1, **dadurch gekennzeichnet, dass** die Vorrichtung weiter Kühlmittel (46) zum Kühlen des Strangs des Plastikmaterials (20) aufweist, der auf die Kante (14) des Werkstücks (16) aufgebracht wird.

9. Vorrichtung nach Anspruch 1, **dadurch gekennzeichnet, dass** die Vorrichtung weiter Zuführmittel (50) zum Zuführen einer dekorativen Schicht (48) auf den Strang des Plastikmaterials (20) aufweist, der auf der Kante (16) des Werkstücks (16) vorgesehen ist.

10. Vorrichtung nach Anspruch 6 und 7, **dadurch gekennzeichnet, dass** das Kühlmittel (46) in einer Position angeordnet ist, in welcher die dekorative Schicht (48) bereits auf dem Strang des Plastikmaterials (20) aufgebracht ist.

11. Vorrichtung nach Anspruch 1, **dadurch gekennzeichnet, dass** das Transportmittel zumindest ein Paar von angetriebenen Rädern (36) aufweist, die so angeordnet sind, dass das Werkstück (16) zwischen den Rädern verklemmt ist.

12. Verfahren zum Aufbringen eines Plastikkantenstreifens (28) auf eine Kante eines plattenartigen Werkstücks (16) wie beispielsweise eines Holzbretts, eines Bretts aus Spänen oder Partikeln, eines Bretts aus holzartigen Partikeln, etc., **dadurch gekennzeichnet, dass** das Verfahren die folgenden Schritte aufweist:
- Extrudieren eines Strangs des Plastikmaterials (20) an eine Kante (14) des Werkstücks (16), und
- anschließendes Formen des extrudierten Strangs des Plastikmaterials (20) in ein gewünschtes Profil.

13. Verfahren nach Anspruch 12, **dadurch gekennzeichnet, dass** während des Extrudierens des Strangs des Plastikmaterials (20) auf die Kante (14) des Werkstücks (16) das Werkstück (16) an einem Extrusionsmittel zum Extrudieren des Strangs des Plastikmaterials (20) vorbei transportiert wird.

14. Verfahren nach Anspruch 12, **dadurch gekennzeichnet, dass** während des Extrudierens des Strangs des Plastikmaterials (20) auf die Kante (14) des Werkstücks (16) das Werkstück (16) stationär gehalten wird und ein Extrusionsmittel zum Extrudieren des Strangs des Plastikmaterials (20) entlang der Kante (14) des Werkstücks (16) bewegt wird.

15. Verfahren nach einem der Ansprüche 12 bis 14, **dadurch gekennzeichnet, dass** der Strang des Plastikmaterials (20) durch Formmittel ausgeformt wird, die zumindest eine drehbare Walze (24) aufweisen, die ein Umfangsprofil hat, das im wesentlichen mit dem gewünschten Profil des Strangs des Plastikmaterials (20) übereinstimmt, der auf die Kante (14) des Werkstücks (16) aufgebracht wird.

16. Verfahren nach einem der Ansprüche 12 bis 14, **dadurch gekennzeichnet, dass** der Strang des Plastikmaterials (20) durch Formmittel geformt wird, die mehrere drehbare Walzen (24) aufweisen, die aufeinanderfolgend angeordnet sind, wobei die Walzen (24) unterschiedliche Umfangsprofile haben, so dass die Walzen (24) zusammen den Strang des Plastikmaterials (20) formen, der auf der Kante (14) des Werkstücks (16) angebracht ist, und zwar in das gewünschte Profil.

17. Verfahren nach Anspruch 12, **dadurch gekennzeichnet, dass** ein Klebstoff auf die Kante (14) des Werkstücks (16) aufgebracht wird, bevor der Strang des Plastikmaterials (20) auf die Kante (14) des Werkstücks (16) aufg wird.

18. Verfahren nach Anspruch 12, **dadurch gekennzeichnet, dass** der Strang des Plastikmaterials (20), der auf die Kante (14) des Werkstücks (16) aufgebracht und in das gewünschte Profil geformt worden ist, mittels Kühlmitteln (46) abgekühlt wird.

19. Verfahren nach Anspruch 12, **dadurch gekennzeichnet, dass** eine dekorative Schicht (48) auf den bereits auf die Kante (14) des Werkstücks (16) extrudierten Strang des Plastikmaterials (20) aufgebracht wird.

20. Verfahren nach Anspruch 19, **dadurch gekennzeichnet, dass** die dekorative Schicht eine Folie (4.8) ist.

## Revendications

1. Appareil pour appliquer une bande de chant en matière plastique (28) sur le chant d'une pièce en cours de fabrication (16) de type panneau, telle qu'un panneau en bois, un panneau de copeaux ou de particules, un panneau de particules semblables à du bois ou autres similaires,
**caractérisé en ce que** l'appareil comprend :
- un moyen d'extrusion (18) pour extruder un ruban en matière plastique (20) sur le chant (14) de la pièce en cours de fabrication (16); et
- un moyen de formage (24) pour ensuite former le ruban extrudé en matière plastique (20) selon le profil désiré.

2. Appareil selon la revendication 1, **caractérisé en ce que** l'appareil comprend de plus un moyen de transport (36) pour déplacer la pièce en cours de fabrication (16) devant le moyen d'extrusion (18).

3. Appareil selon la revendication 1, **caractérisé en ce qu'**il comprend un moyen de support stationnaire (52) pour supporter la pièce en cours de fabrication (16); un moyen de serrage (54) pour serrer la pièce en cours de fabrication sur le moyen de support; et un élément mobile (58) sur lequel sont supportés le moyen d'extrusion (18) et le moyen de formage (24.1, 24.2) de sorte que le moyen d'extrusion (18) et le moyen de formage (24.1, 24.2) peuvent être déplacés le long du chant sur lequel doit être appliquée la bande.

4. Appareil selon la revendication 1, **caractérisé en ce que** l'appareil comprend de plus au moins un moyen de pressage (34) pour appuyer la pièce en cours de fabrication (16) contre le moyen de formage (24).

5. Appareil selon la revendication 1, **caractérisé en ce que** le moyen de formage comprend au moins un rouleau rotatif (24) présentant un profil circonférence correspondant en substance au profil désiré pour le ruban en matière plastique (20) appliqué sur le chant (14) de la pièce en cours de fabrication (16).

6. Appareil selon la revendication 1, **caractérisé en ce que** le moyen de formage comprend plusieurs rouleaux rotatifs (24) disposés successivement, dans lequel les rouleaux (24) présentent des profils circonférentiels différents tels que, tous ensemble, les rouleaux (24) déforment le ruban en matière plastique (20) appliqué sur le chant (14) de la pièce en cours de fabrication (16) pour l'amener au profil désiré.

7. Appareil selon la revendication 1, **caractérisé en ce que** l'appareil comprend de plus des moyens d'application (42) pour appliquer un adhésif sur le chant (14) de la pièce en cours de fabrication (16) qui doit être recouvert par le ruban en matière plastique (20), dans lequel les moyens d'application (42) sont disposés en amont de la position où le ruban en matière plastique (20) est appliqué sur le chant (14) de la pièce en cours de fabrication (16).

8. Appareil selon la revendication 1, **caractérisé en ce que** l'appareil comprend de plus des moyens de refroidissement (46) pour refroidir le ruban en matière plastique (20) appliqué sur le chant (14) de la pièce en cours de fabrication (16).

9. Appareil selon la revendication 1, **caractérisé en ce que** l'appareil comprend de plus des moyens d'alimentation (50) pour déposer une couche décorative (48) sur le ruban en matière plastique (20) appliqué sur le chant (14) de la pièce en cours de fabrication (16).

10. Appareil selon les revendications 6 et 7, **caractérisé en ce que** le moyen de refroidissement (46) est placé à un endroit où la couche décorative (48) est déjà appliquée sur le ruban en matière plastique (20).

11. Appareil selon la revendication 1, **caractérisé en ce que** le moyen de transport comprend au moins une paire de galets menés (36) disposés de telle sorte que la pièce en cours de fabrication (16) soit serrée entre les galets.

12. Méthode pour appliquer une bande de chant en matière plastique (28) sur le chant d'une pièce en cours de fabrication (16) de type panneau, telle qu'un panneau en bois, un panneau de copeaux ou de particules, un panneau de particules semblables à du bois ou autres similaires,
**caractérisé en ce que** la méthode comprend les étapes suivantes :
- extruder un ruban en matière plastique (20) sur le chant (14) de la pièce en cours de fabrication (16); et
- former ensuite le ruban extrudé en matière plastique (20) pour l'amener au profil désiré.

13. Méthode selon la revendication 12, **caractérisée en ce que**, pendant l'étape de la méthode au cours de laquelle le ruban en matière plastique (20) est extrudé sur le chant (14) de la pièce en cours de fabrication (20), la pièce en cours de fabrication (16) est déplacée devant un moyen d'extrusion pour extruder le ruban en matière plastique (20).

14. Méthode selon la revendication 12, **caractérisée en ce que**, pendant l'étape de la méthode au cours de laquelle le ruban en matière plastique (20) est extrudé sur le chant (14) de la pièce en cours de fabrication (20), la pièce en cours de fabrication (16) est maintenue fixe, et un moyen d'extrusion pour extruder le ruban en matière plastique (20) est déplacé le long du chant (14) de la pièce en cours de fabrication (16).

15. Méthode selon l'une des revendications 12-14, **caractérisée en ce que** le ruban en matière plastique (20) est formé par un moyen de formage comprenant au moins un rouleau rotatif (24) présentant un profil circonférentiel correspondant en substance au profil désiré pour le ruban en matière plastique (20) appliqué sur le chant (14) de la pièce en cours de fabrication (16).

16. Méthode selon l'une des revendications 12-14, **caractérisée en ce que** le ruban en matière plastique (20) est formé par un moyen de formage comprenant plusieurs rouleaux rotatifs (24) disposés successivement, les rouleaux (24) présentant des profils circonférentiels différents tels que, tous ensemble, les rouleaux (24) déforment le ruban en matière plastique (20) appliqué sur le chant (14) de la pièce en cours de fabrication (16) pour l'amener au profil désiré.

17. Méthode selon la revendication 12, **caractérisée en ce qu'**un adhésif est appliqué sur le chant (14) de la pièce en cours de fabrication (16) avant que le ruban en matière plastique (20) soit appliqué sur le chant (14) de la pièce en cours de fabrication (16).

18. Méthode selon la revendication 12, **caractérisée en ce que** le ruban en matière plastique (20) appliqué sur le chant (14) de la pièce en cours de fabrication (16), et formé selon le profil désiré, est refroidi par des moyens de refroidissement (46).

19. Méthode selon la revendication 12, **caractérisée en ce qu'**une couche décorative (48) est appliquée sur le ruban en matière plastique (20) déjà extrudé sur le chant (14) de la pièce en cours de fabrication (16).

20. Méthode selon la revendication 19, **caractérisée en ce que** la couche décorative est une feuille (48).
